# EUROPEAN PATENT SPECIFICATION

(11) **EP 3 332 306 B1**
(45) Date of publication and mention of the grant of the patent: **18.08.2021**
(21) Application number: 16742127.0
(22) Date of filing: 11.07.2016
(51) Int. Cl.: G06F 1/32, G06F 1/3234, G06F 1/3206

(54) **SYSTEM AND METHOD FOR CACHE AWARE LOW POWER MODE CONTROL IN A PORTABLE COMPUTING DEVICE**
SYSTEM UND VERFAHREN FÜR CACHEBEWUSSTE NIEDRIGLEISTUNGSMODUSSTEUERUNG BEI EINER TRAGBAREN DATENVERARBEITUNGSVORRICHTUNG
SYSTÈME ET PROCÉDÉ DE COMMANDE DE MODE À FAIBLE ÉNERGIE SENSIBLE À LA MÉMOIRE CACHE DANS UN DISPOSITIF INFORMATIQUE PORTABLE

(30) Priority: 05.08.2015 US 201514819384
(43) Date of publication of application: 13.06.2018
(73) Proprietor: Qualcomm Incorporated, San Diego, CA 92121-1714 (US)
(72) Inventor: VANKA, Krishna Vsssr, San Diego, California 92121 (US); AMBAPURAM, Sravan Kumar, San Diego, California 92121 (US)
(74) Representative: Dunlop, Hugh Christopher
(86) International application number: PCT/US2016/041703
(87) International publication number: WO 2017/023494

(56) References cited:
- EP-A2- 2 664 977
- US-A1- 2010 169 683
- US-A1- 2012 166 731
- US-A1- 2014 173 206
- US-A1- 2014 281 602

## Description

### DESCRIPTION OF THE RELATED ART

Mobile devices with a processor that communicate with other devices through a variety of communication media, including wireless signals, are ubiquitous. Mobile devices including portable computing devices (PCDs) may be used to communicate with a variety of other devices via wireless, analog, digital and other means. These mobile devices may include mobile phones, portable digital assistants (PDAs), portable game consoles, palmtop computers, tablet computers and other portable electronic devices. In addition to the primary function, PCDs may also be used for downloading and playing games; downloading and playing music; downloading and viewing video; global positioning system (GPS) navigation, web browsing, and running applications.

To accommodate increased functionality, modern PCDs typically include multiple processors or cores (e.g., central processing unit(s) (CPUs)) with associated cache memories for controlling or performing varying functions of the PCD in parallel, such as in multiple parallel threads. Keeping multiple cores active results in large energy consumption, reducing battery life in a PCD. As a result, many PCDs place one or more core in a lower power mode if the core is idle or not actively executing a task.

Decisions about placing a core in a low power mode may be made with an algorithm or other logic. Limiting factors on the decision whether place a core include the time and/or energy overhead associated with taking the core to the low power state and then reactivating the core out of the low power state. These factors are typically pre-determined and unchanging, and do not take into consideration the current operating state of the core or the operating state of the other components on which the core relies, such as the core's associated cache memory.

Thus, there is a need for systems and methods for improved implementation of low power modes for cores/CPUs based on the operating state, and in particular the operating state of the cache memory associated with the cores/CPUs modes.

US 2014/173206 A1 discloses a processor including multiple tiles, each including a core and a tile cache hierarchy. US 2012/166731 A1 discloses employing an adaptive break-even time, based on the load level of the cache.

### SUMMARY OF THE DISCLOSURE

Systems and methods and computer program products are disclosed that allow for improved implementation of low power modes for cores/CPUs in a portable computing device (PCD) based on the operating state of the cache memory associated with the cores/CPUs modes. In operation, an embodiment is a method according to independent claim 1.

Another embodiment is a computer system according to independent claim 5. Yet another embodiment is a computer program product according to independent claim 9. Further aspects of the invention are outlined in the dependent claims.

### BRIEF DESCRIPTION OF THE DRAWINGS

In the drawings, like reference numerals refer to like parts throughout the various views unless otherwise indicated. For reference numerals with letter character designations such as "102A" or "102B", the letter character designations may differentiate two like parts or elements present in the same figure. Letter character designations for reference numerals may be omitted when it is intended that a reference numeral to encompass all parts having the same reference numeral in all figures. Similarly, for reference numerals with ' designations, such as 102', the ' designation may designate an alternative example for the underlying element with the same reference numerals (but without the ' designation).
FIG. 1 is a block diagram of an example of a portable computing device (PCD) in which the improved implementation of low power modes for cores/CPUs in a portable computing device (PCD) based on the operating state of the present disclosure may be implemented;
FIG. 2 is an exemplary timing diagram of the execution of parallel threads in a PCD, such as the PCD illustrated in FIG. 1;
FIG. 3A is a graph illustrating exemplary low power modes for a core or CPU, such as one of the cores of CPUs of the PCD illustrated in FIG. 1;
FIG. 3B is an exemplary graph illustrating additional aspects of the exit from one of the low power modes illustrated in FIG. 3A;
FIG. 4 is a block diagram showing an example of a system for improved implementation of low power modes for cores/CPUs based on the operating state in a PCD, such as the PCD illustrated in FIG. 1;
FIG. 5A is a flowchart describing aspects of an example of a method for improved implementation of low power modes for cores/CPUs based on the operating state;
FIG. 5B illustrates example components capable of performing the aspects of the method illustrated in FIG. 5A;
FIG. 6A is a flowchart describing additional aspects of an embodiment of a method for improved implementation of low power modes for cores/CPUs based on the operating state; and
FIG. 6B illustrates example components capable of performing the aspects of the method illustrated in FIG. 6A.

### DETAILED DESCRIPTION

The word "exemplary" is used herein to mean "serving as an example, instance, or illustration." Any aspect described herein as "exemplary" is not necessarily to be construed as preferred or advantageous over other aspects.

In this description, the term "application" may also include files having executable contcnt, such as: object codc, scripts, byte codc, markup language files, and patches. In addition, an "application" referred to herein, may also include files that are not executable in nature, such as documents that may need to be opened or other data files that need to be accessed.

The term "content" may also include files having executable content, such as: object code, scripts, byte code, markup language files, and patches. In addition, "content" referred to herein, may also include files that are not executable in nature, such as documents that may need to be opened or other data files or data values that need to be accessed.

As used in this description, the terms "component," "database," "module," "system," and the like are intended to refer to a computer-related entity, either hardware, firmware, a combination of hardware and software, software, or software in execution. For example, a component may be, but is not limited to being, a process running on a processor, a processor, an object, an executable, a thread of execution, a program, and/or a computer. By way of illustration, both an application running on a computing device and the computing device may be a component. One or more components may reside within a process and/or thread of execution, and a component may be localized on one computer and/or distributed between two or more computers. In addition, these components may execute from various computer-readable media having various data structures stored thereon. The components may communicate by way of local and/or remote processes such as in accordance with a signal having one or more data packets (*e.g*., data from one component interacting with another component in a local system, distributed system, and/or across a network such as the Internet with other systems by way of the signal).

In this description, the term "portable computing device" ("PCD") is used to describe any device operating on a limited capacity rechargeable power source, such as a battery and/or capacitor. Although PCDs with rechargeable power sources have been in use for decades, technological advances in rechargeable batteries coupled with the advent of third generation ("3G") and fourth generation ("4G") wireless technology have enabled numerous PCDs with multiple capabilities. Therefore, a PCD may be a cellular telephone, a satellite telephone, a pager, a PDA, a smartphone, a navigation device, a smartbook or reader, a media player, a combination of the aforementioned devices, a laptop or tablet computer with a wireless connection, among others.

In this description, the terms "central processing unit ("CPU")," "digital signal processor ("DSP")," "graphics processing unit ("GPU")," "chip," "video codec," "system bus," "image processor," and "media display processor ("MDP")" are non-limiting examples of processing components that may be implemented on an SoC. These terms for processing components are used interchangeably except when otherwise indicated. Moreover, as discussed below, any of the above or their equivalents may be implemented in, or comprised of, one or more distinct processing components generally referred to herein as "core(s)" and/or "sub-core(s)."

In this description, the terms "workload," "process load," "process workload," and "graphical workload" may be used interchangeably and generally directed toward the processing burden, or percentage of processing burden, that is associated with, or may be assigned to, a given processing component in a given embodiment. Additionally, the related terms "frame," "code block" and "block of code" may be used interchangeably to refer to a portion or segment of a given workload. Further to that which is defined above, a "processing component" or the like may be, but is not limited to being, a central processing unit, a graphical processing unit, a core, a main corc, a sub-core, a processing area, a hardware engine, etc. or any component residing within, or external to, an integrated circuit within a portable computing device.

One of ordinary skill in the art will recognize that the term "MIPS" represents the number of millions of instructions per second a processor is able to process at a given power frequency. In this description, the term is used as a general unit of measure to indicate relative levels of processor performance in the exemplary embodiments and will not be construed to suggest that any given embodiment falling within the scope of this disclosure must, or must not, include a processor having any specific Dhrystone rating or processing capacity. Additionally, as would be understood by one of ordinary skill in the art, a processor's MIPS setting directly correlates with the power, frequency, or operating frequency, being supplied to the processor.

The present systems and methods for improved implementation of low power modes for cores/CPUs based on the operating state in a PCD provide a cost effective way to dynamically implement improved decision making as to whether to enter an idle core or CPU into a low power mode, or whether to enter the idle core or CPU into a low power mode at all. In an embodiment, for a cache associated with the core/CPU, the present systems and methods consider the impact of the operating state of the cache prior to the core/CPU entering the idle state when making determinations about the "costs" or "overhead" of entering the core/CPU into a low power mode.

The systems described herein, or portions of the system, may be implemented in hardware or software as desired. If implemented in hardware, the devices can include any, or a combination of, the following technologies, which are all well known in the art: discrete electronic components, an integrated circuit, an application-specific integrated circuit having appropriately configured semiconductor devices and resistive elements, *etc.* Any of these hardware devices, whether acting or alone, with other devices, or other components such as a memory may also form or comprise components or means for performing various operations or steps of the disclosed methods.

When a system described herein is implemented, or partially implemented, in software, the software portion can be used to perform various steps of the methods described herein. The software and data used in representing various elements can be stored in a memory and executed by a suitable instruction execution system (microprocessor). The software may comprise an ordered listing of executable instructions for implementing logical functions, and can be embodied in any "processor-readable medium" for use by or in connection with an instruction execution system, apparatus, or device, such as a single or multiple-core processor or processor-containing system. Such systems will generally access the instructions from the instruction execution system, apparatus, or device and execute the instructions.

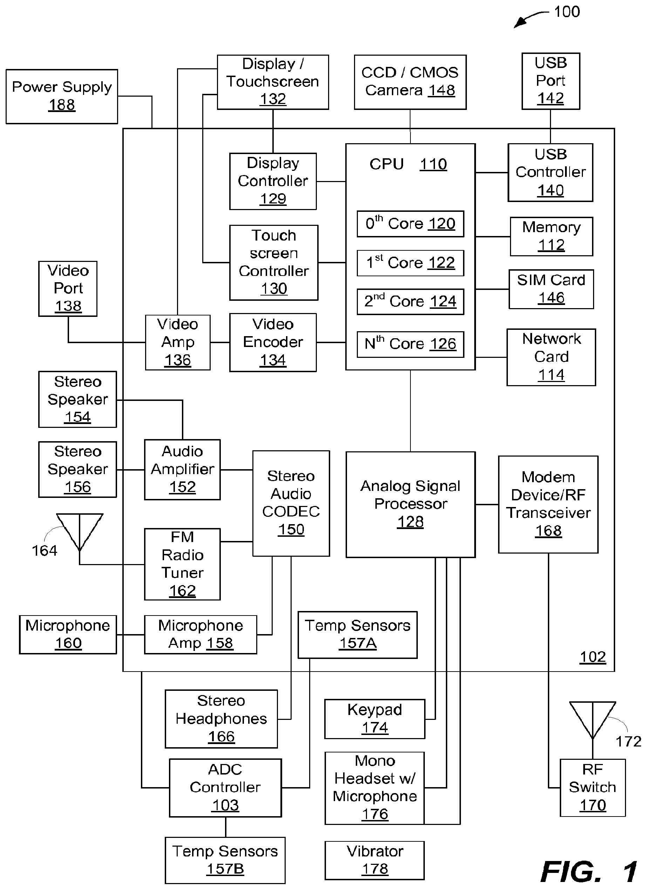

FIG. 1 is a block diagram of an exemplary, non-limiting aspect of a PCD 100 that may implement the systems and methods described herein. The PCD 100 illustrated in FIG. 1 is in the form of a wireless telephone capable of communicating with one or more wireless communication system. Such wireless communication system may be a broadband wireless communication system, including a Long Term Evolution (LTE) system, a Code Division Multiple Access (CDMA) system, a Frequency Division Multiple Access (FDMA) system, a Global System for Mobile Communications (GSM) system, a wireless local area network (WLAN) system, some other wireless system, or a combination of any of these. A CDMA system may implement Wideband CDMA (WCDMA), CDMA IX, Evolution-Data Optimized (EVDO), Time Division Synchronous CDMA (TD-SCDMA), or some other version of CDMA.

As shown, the PCD 100 includes an on-chip system (or SoC) 102 that includes a heterogeneous multi-core central processing unit ("CPU") 110 and an analog signal processor 128 that are coupled together. The CPU 110 may comprise a zeroth core 120, a first core 122, second core 124, and an Nth core 126 as understood by one of ordinary skill in the art. Further, instead of a CPU 110, a digital signal processor ("DSP") may also be employed as understood by one of ordinary skill in the art. Moreover, as is understood in the art of heterogeneous multi-core processors, each of the cores 120, 122, 124, 126 may have different architectures, may process workloads at different efficiencies, may consume different amounts of power when operating, etc. Each of the cores 120, 122, 124, 126 may control one or more function of the PCD 100. For example, the zeroth core 120 may be a graphics processing unit ("GPU") for controlling graphics in the PCD 100. Such GPU/zeroth core 120 may further include drivers, cache(s), and/or other components necessary to control the graphics in the PCD 100, including controlling communications between the GPU core 120 and memory 112 (including buffers). For another example, a different core such as the Nth core 126 may run the PCD operating system, which may be a high-level operating system ("HLOS"). Such Nth/HLOS core 126 may further include drivers, cache(s), hardware interfaces, and/or other components necessary to run the HLOS, including communications between the core 126 and memory 112 (which may include flash memory).

Any of the cores 120, 122, 124, 126 may be a separate processor such as a CPU or a digital signal processor. One or more of the cores 120, 122, 124, 126 may include, in addition to a processor, other components such as one or more cache memories. These cache memories may include a dedicated cache memory for a particular core or processor, such as for example an L1 cache. Additionally, or alternatively these cache memories may include a cache memory that is shared with and/or accessible by other cores or processors, such as for example an L2 cache.

Additionally, each of the corcs 120, 122, 124, 126 may be functionally grouped together with other components, such as memory 112, sensors, or other hardware of the PCD 100 to form a subsystem as described below. Such subsystem(s) may be implemented in order to perform certain functionality of the PCD, such as an audio subsystem, a GPS subsystem, a sensor subsystem, etc. One or more of such subsystems may also be configured to operate independently of the SoC 102, such as to continue operation when the SoC 102 has been placed into a low or reduced power state or mode, including a power off state or mode.

As mentioned, a memory 112 is illustrated as coupled to the multicore CPU 110 in FIG. 1. This memory 112 may for example be random access memory ("RAM"), read only memory ("ROM"), flash memory, or any combination thereof. Additionally, the memory 112 may comprise multiple different types of memory located together or located remotely from each other, including buffers, main memories, and caches. Such caches could include one or more L2, L3, LN caches that may be accessed by one or more of the cores 120, 122, 124, 126. Additionally, although the memory 112 is illustrated as located on the SoC 102, the memory 112 may include one or more memories located physically remote from the SoC 102 or "off-chip," such as a Double Data Rate ("DDR") memory in communication with the multicore CPU 110 and/or one or more of the corcs 120, 122, 124, 126.

As illustrated in FIG. 1, a display controller 129 and a touch screen controller 130 are coupled to the multicore CPU 110. In turn, a display/touchscreen 132, external to the on-chip system 102, is coupled to the display controller 129 and the touch screen controller 130. A digital camera 148 may also be coupled to the multicore CPU 110. In such implementations, the digital camera 148 may be controlled by one of the cores 120, 122, 124, 126 of the multicore CPU 110. In an exemplary aspect, the digital camera 148 is a charge-coupled device ("CCD") camera or a complementary metal-oxide semiconductor ("CMOS") camera

The PCD 100 of FIG. 1 may further include a video encoder 134, *e.g.,* a phase alternating line ("PAL") encoder, a sequential couleur a memoire ("SECAM") encoder, or a national television system(s) committee ("NTSC") encoder, or any other type of video decoder 134 coupled to the multicore CPU 110. Further, a video amplifier 136 is coupled to the video encoder 134 and the display/touchscreen 132. A video port 138 is coupled to the video amplifier 136. As depicted in FIG. 1, a universal serial bus ("USB") controller 140 is coupled to the multicore CPU 110. Also, a USB port 142 is coupled to the USB controller 140. A subscriber identity module ("SIM") card 146 may also be coupled to the multicore CPU 110. In other implementations, multiple SIM cards 146 may be implemented.

As further illustrated in FIG. 1, a stereo audio CODEC 150 may be coupled to the multicore CPU 110. Moreover, an audio amplifier 152 may be coupled to the stereo audio CODEC 150. In an exemplary aspect, a first stereo speaker 154 and a second stereo speaker 156 are coupled to the audio amplifier 152. FIG. 1 shows that a microphone amplifier 158 may be also coupled to the stereo audio CODEC 150. Additionally, a microphone 160 may be coupled to the microphone amplifier 158. In a particular aspect, a frequency modulation ("FM") radio tuner 162 may be coupled to the stereo audio CODEC 150. Also, a FM antenna 164 is coupled to the FM radio tuner 162. Further, stereo headphones 166 may be coupled to the stereo audio CODEC 150.

FIG. 1 further indicates that a modem device/radio frequency ("RF") transceiver 168 may be coupled to the multicore CPU 110. The modem device 168 may support one or more of the wireless communications protocols, such as GSM, CDMA, W-CDMA, TDSCDMA, LTE, and variations of LTE such as, but not limited to, FDB/LTE and PDD/LTE wireless protocols. Additionally, there may be multiple modem devices 168, and in such implementations, different modem devices 168 may support come or all of the wireless communication protocols and/or technologies listed above.

In some implementations the modem device 168 may be further comprised of various components, including a separate processor, memory, and/or RF transceiver. In other implementations the modem device 168 may simply be an RF transceiver. Further, the modem dcvicc 168 may be incorporated in an integrated circuit. That is, the components comprising the modem device 168 may be a full solution in a chip and include its own processor and/or core that may be monitored by the systems and methods described herein. Alternatively, various components comprising the modem device 168 may be coupled to the multicore CPU 110 and controlled by one of the cores 120, 122, 124 of the CUP 110. An RF switch 170 may be coupled to the modem device 168 and an RF antenna 172. In various embodiments, there may be multiple RF antennas 172, and each such RF antenna 172 may be coupled to the modem device 168 through an RF switch 170.

As shown in FIG. 1, a keypad 174 may be coupled to the multicore CPU 110 either directly, or through the analog signal processor 128. Also, a mono headset with a microphone 176 may be coupled to the multicore CPU 110 and or analog signal processor 128. Further, a vibrator device 178 may also be coupled to the multicore CPU 110 and/or analog signal processor 128. FIG. 1 also shows that a power supply 188 may be coupled to the on-chip system 102, and in some implementations the power supply 188 is coupled via the USB controller 140. In a particular aspect, the power supply 188 is a direct current (DC) power supply that provides power to the various components of the PCD 100 that require power. Further, in a particular aspect, the power supply 188 may be a rechargeable DC battery or a DC power supply that is derived from an alternating current (AC) to DC transformer that is connected to an AC power source.

The multicore CPU 110 may also be coupled to one or more internal, on-chip thermal sensors 157A as well as one or more external, off-chip thermal sensors 157B. The on-chip thermal sensors 157A may comprise one or more proportional to absolute temperature ("PTAT") temperature sensors that are based on vertical PNP structure and are usually dedicated to complementary metal oxide semiconductor ("CMOS") very large-scale integration ("VLSI") circuits. The off-chip thermal sensors 157B may comprise one or more thermistors. The thermal sensors 157 may produce a voltage drop that is converted to digital signals with an analog-to-digital converter ("ADC") controller 103. However, other types of thermal sensors 157 may be also employed.

FIG. 1 further indicates that the PCD 110 may also include a network card 114 that may be used to access a data network, *e.g*., a local area network, a personal area network, or any other network. The network card 114 may be a Bluetooth network card, a WiFi network card, a personal area network ("PAN") card, or any other network card well known in the art. Further, the network card 114 may be incorporated in an integrated circuit. That is, the network card 114 may be a full solution in a chip, and may not be a separate network card 114.

As depicted in FIG. 1, the display/touchscreen 132, the video port 138, the USB port 142, the camera 148, the first stereo speaker 154, the second stereo speaker 156, the microphone 160, the FM antenna 164, the stereo headphones 166, the RF switch 170, the RF antenna 172, the keypad 174, the mono headset 176, the vibrator 178, and the power supply 180 are external to the SoC 102.

The SoC 102 may also include various buses and/or interconnects (not shown) to communicatively couple the multicore CPU 110 and/or one or more of the cores 120, 122, 124, 126 with other subsystems or components of the SoC 102 or PCD 100. It should be understood that any number of bus and/or interconnect controllers may also be implemented and arranged to monitor a bus/interconnect interface in the on-chip system 102. Alternatively, a single bus/interconnect controller could be configured with inputs arranged to monitor two or more bus/interconnect interfaces that communicate signals between CPU 110 and various subsystems or components of the PCD 100 as may be desired.

One or more of the method steps described herein may be enabled via a combination of data and processor instructions stored in the memory 112 and/or a memory located on the CPU 110. These instructions may be executed by one or more cores 120, 122, 124, 126 in the multicore CPU 110 and/or subsystems of the SoC 102 in order to perform the methods described herein. Further, the multicore CPU 110, one or more of the cores 120, 122, 124, 126, the memory 112, other components of the PCD 100, or a combination thereof may serve as a means for executing one or more of the method steps described herein in order enable improved implementation of low power modes for cores/CPUs based on the operating state, and in particular the operating state of one or more cache memories associated with the cores/CPUs modes.

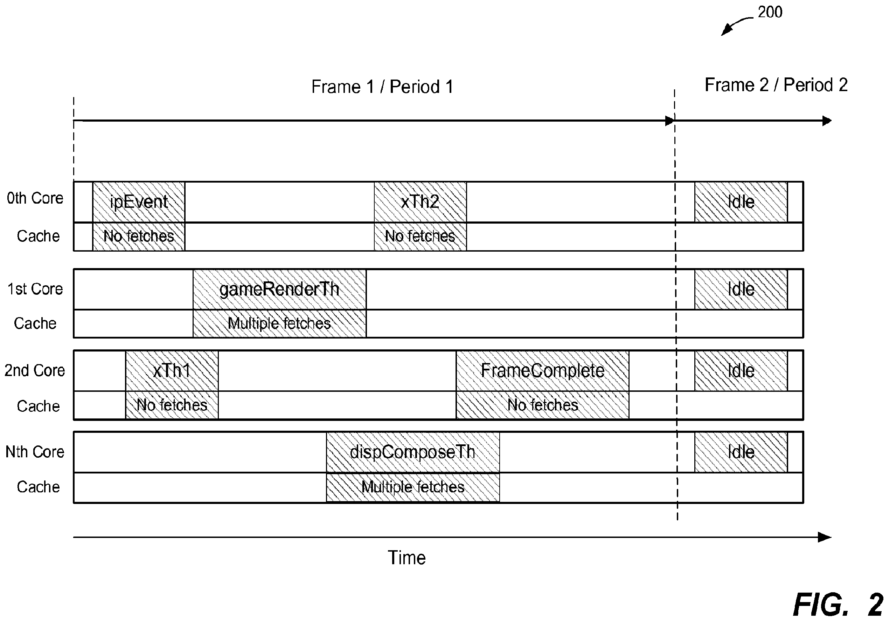

FIG. 2 is an exemplary timing diagram of the execution of parallel threads in a PCD, such as by cores 120, 122, 124, 126 of the PCD illustrated in FIG. 1. As illustrated in FIG. 2, during operation cores 120, 122, 124, 126 may perform various tasks in parallel over a particular time period. The time periods may be generated, or measured in accordance with any periodic signal received by the multi-core CPU 110 (FIG. 1). For example, the periodic signal may be for example a clock signal, a periodic interrupt, a vertical synchronization ("V-Sync") signal, etc., in differing examples. In the exemplary timing diagram of FIG. 2, the cores 120, 122, 124, 126 are executing a game on the PCD 100. In this example the time periods are in accordance with a V-Sync signal. However one of ordinary skill would understand that FIG. 2 also applies to other signals and/or use cases, such as for example video playback, operating teleconferencing or video conferencing software, etc.

FIG. 2 shows a first time period, Frame 1/Period 1, and a portion of a second time period, Frame 2/Period 2. As illustrated in FIG. 2, all of 0th core 120, 1st core 122, 2nd core 124 and Nth core 126 arc active in Frame 1. As would be understood by one of skill in the art, although all of cores 120, 122, 124, 126 are active during Frame 1, the level or amount of activity is not necessarily equally distributed between the cores 120, 122, 124, 126. For example, as illustrated in FIG. 2 the 0th Core 120 thread executes two, relatively smaller tasks, ipEvent and xTh2 during Frame 1. The 1st Core 122 thread executes one, relatively larger task, gameRenderTh during Frame 1.

As would also be understood by one of skill in the art, the different tasks executed by each thread may require different activity levels for one or more cache associated with the cores 120, 122, 124, 126 executing the threads. Using the 0th Core as an example again, as illustrated in FIG. 2, the two tasks executed during Frame 1 require little activity by the cache associated with the 0th Core. This cache associated with the 0th Core may be an L1 cache, an L2 cache, or any other cache to which the 0th Core has access. In FIG. 2, this lack of activity by the 0th Core's cache is represented by the cache requiring no fetches of content to place into the cache, such as fetches from a different cache, an off-chip memory like a DDR, a DVD disk, or a remote server over a network connection.

Continuing with the example, as illustrated in FIG. 2, the single task of the thread executed by the 1st Core requires a relatively large activity level by the cache associated with the 1st Core. This large activity level by the 1st Core's cache is represented in FTG. 2 by the cache requiring multiple fetches of content from external sources, resulting in the fetched content being written as one or more cache lines in the cache. Such content fetches may include retrieving content from a different cache, an off-chip memory like a DDR, a DVD disk, or a remote server over a network connection for example.

As also illustrated in FIG. 2, after the completion of Frame 1 / Period 1, none of cores 120, 122, 124, 126 have any threads or tasks to execute in Frame 2 / Period 2. As a result cores 120, 122, 124, 126 will enter an idle state for at least Frame 2 / Period 2. In other examples, one or more of cores 120, 122, 124, 126 may remain active during Frame 2/Period 2 while the remaining cores 120, 122, 124, 126 enter the idle state. When the PCD 100 detects that a core/CPU is entering an idle state, such as in Frame 2/Period 2 illustrated in FIG. 2, the PCD 100 may try and place the core/CPU into a low power mode, to reduce the power consumption of the core/CPU. As used herein, "low power mode" or "LPM" may include one or more modes or states of a core/CPU, such as a non-functional state, sleep state, reduced or zero-voltage state, reduced or zero-power state, etc., in which the core/CPU consumes or leaks less power than the core/CPU consumes or leaks while in a fully active state.

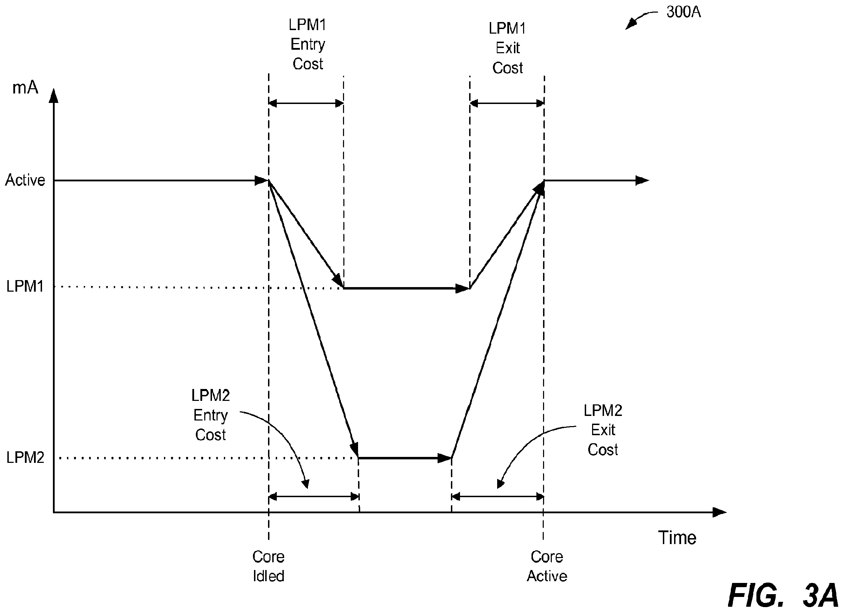

For example, FTG. 3A is a graph 300A illustrating exemplary low power modes that a core/CPU, such as one or more of cores 120, 122, 124, 126 may be placed into when the core/CPU is detected as being idle. In the graph 300A of FIG. 3A, the x-axis represents time and the y-axis represents the power in milliamperes ("mA") consumed or leaked by the exemplary core/CPU. As would be understood, the graph 300A of FIG. 3A may vary for different cores/CPU depending on the system, the number of low power modes for the core/CPU, the system or core/CPU architecture, the implementation, ctc.

In the example of FIG. 3A, the core has an Active state and two low power modes, LPM1 and LPM 2. As also illustrated in FIG. 3A, at a point in time labeled Core Idled, the exemplary core enters an idle state (see Frame 2 of FIG. 2). When in the idle state, the core may be left in Active mode, or may be placed into one of the low power modes LPM1 or LPM2 illustrated in FIG. 3A. If placed in one of the low power modes, the core may remain in that mode until a second point in time labeled Core Active when some operation or task will require this core to be in an Active mode again. As would be understood, more or fewer low power modes are possible for a particular implementation of a corc.

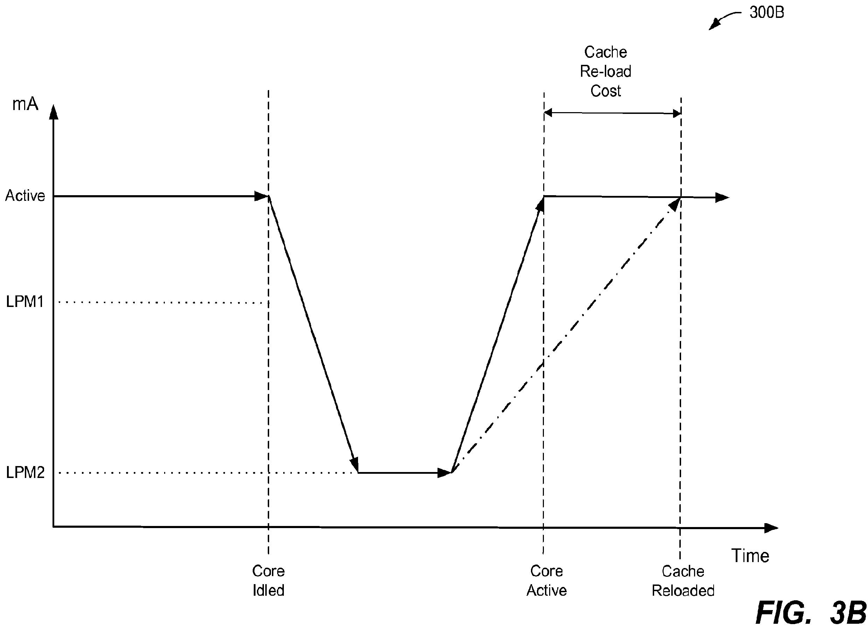

As illustrated in FIG. 3A, while the core is in the Active mode, it consumes or leaks a first amount of power (shown as mA). If the core is placed in LPM1 it will consume or leak a second amount of power, lower than the amount of power of the Active mode. Additionally, if the core is placed in LPM2 it will consume or leak a third amount of power, lower than the amount of power of the Active mode and LPM1. As would be understood, the power levels for Active mode, LPM1 and LPM2 shown in FIG. 3A are illustrative, and may vary from what is illustrated in FIG. 3 for different cores/CPUs. As would also be understood, entering the core/CPU into a low power mode also typically results in one or more cache(s) associated with the core/CPU to be flushed and/or placed into a low power mode or state along with the core/CPU. Bringing the core/CPU out of the low power mode, correspondingly typically results in the one or more cache(s) being brought out of the low power mode or state and/or repopulated with the cache lines present when the cache was placed in the low power mode.

As also shown in FIG. 3A, there is a time delay to both enter and exit cach of LPM1 and LPM2 (also called an "entry latency" and "exit latency"), as well as an amount of power required to enter into and exit out of each of LPM1 and LPM2. The amount of time required to cause a core to enter and exit from the low power mode, and the power "cost" or "overhead" of entering and exiting the core from low power mode, will vary for each core/CPU. These entry/exit latencies and entry/exit power costs can be pre-determined for each available low power mode for a core/CPU, such as for example by testing at a manufacturer. Once determined, the entry/exit latencies and entry/exit power costs for each available low power mode do not generally change for a particular core/CPU, and may be "hardwired" or otherwise stored on the PCD for use by an algorithm or logic making determinations whether to enter the core into a low power mode.

In an implementation for the exemplary core illustrated in FIG. 3A, the entry/exit latency for LPM1 will have been previously determined, as will the entry/exit power cost for LPM1. The PCD 100 becomes aware that the core has entered an idle state labeled at a time labeled Core Idled in FIG. 3A. Knowing when the core will next be required to be active again to perform some task of operation - the time labeled Core Active - in FIG. 3A, and knowing the entry/exit latency for the core, the PCD 100 can determine how long the core will be able to stay in LPM1 (the core's "residency" in LPM1) before a wake up process has to begin to bring the core back to the Active mode.

Knowing how long the core will be able to stay in LPM1, the power leakage (shown in mA) of the core while in LPM1, and the entry/exit power cost for LPM1, the PCD can determine whether taking the core to LPM1 results in any actual power savings compared to leaving the core in Active mode for the same time period. The same determination may also be made for LPM2 if desired or as part of a selection of a "best" low power mode to enter if desired. As would be understood, in an implementation the algorithm or logic for making these determinations about power savings for a low power mode may be the same for multiple different cores. However, the particular parameters used to make the determinations, and the results of the determinations, will vary for different cores/CPUs depending on their architecture, implementations, etc.

It has been observed that there can also be an additional latency and additional power cost incurred by other components associated with the core/CPU when bringing the core/CPU out of a low power mode. FIG. 3B for example is a graph 300B illustrating additional aspects of the exit of the core/CPU from the LPM2 low power mode illustrated in FIG. 3A. As shown in FIG. 3B, in addition to the latency and power cost of bringing the core/CPU out of LPM2, there is also a latency and power cost of re-populating or rebuilding the cache(s) associated with the core/CPU.

Re-populating or rebuilding the cache(s) associated with the core/CPU may include the latency and power cost of re-fetching the content from the external source(s) and/or re-writing the cache lines into the cache. This additional exit latency and power cost of rebuilding the cache is not typically considered in the determination of whether to take the core/CPU to LPM2. In an example where, prior to entering the idle state, the core/CPU was performing tasks or threads that required no or few fetch operations by the cache, the additional exit latency and power cost of rebuilding the cache may be negligible.

In examples where, prior to entering the idle state, the core/CPU was performing tasks or threads that required many fetches by the cache, the additional exit latency and power cost of rebuilding the cache may be substantial. As illustrated in the exemplary graph 300B of FIG. 3B for instance, the additional latency incurred rebuilding or re-populating the cache lines of the cache may effectively stall the core/CPU after it has been brought back to an Active mode. In some instances, requiring the core/CPU to wait in Active mode while its cache is rebuilt or re-loaded may negate any benefits from placing the core/CPU in the low power mode. Additionally in some instance, requiring the core/CPU to wait in Active mode while its cache is rebuilt or re-loaded may result in a greater power cost than if the core/CPU had just been left in Active mode.

As would be understood, the amount of impact a cache has on the low power mode of a core/CPU can depend on the operating state of the cache when the core/CPU entered the idle state. Therefore, the latency and power cost for a cache may not be calculated using entirely predetermined parameters as arc typically used in low power mode algorithms, logic, drivers, controllers, etc.

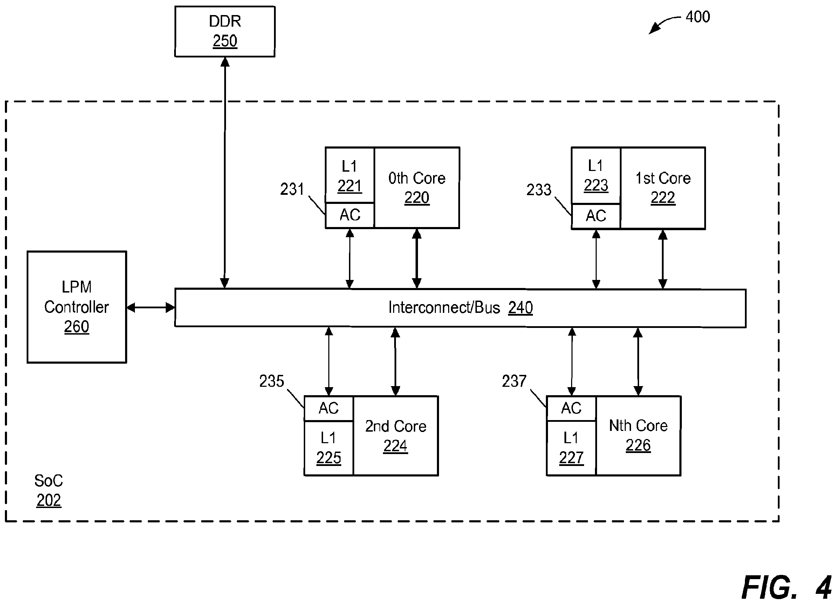

FIG. 4 is a block diagram showing an implementation of a system 400 for improved implementation of low power modes for cores/CPUs based on the operating state in a PCD, such as the PCD illustrated in FIG. 1. The exemplary system 400 includes a system-on-a-chip (SoC) integrated circuit 202, which could be implemented in a PCD (similar to the SoC 102 in FIG. 1). The SoC 202 of FIG. 4 includes a 0th Core 220, 1st Core 222, 2nd Core 224, and Nth Core 226, all connected to an interconnect or bus 240 of the SoC 202. The interconnect/bus 240 of the SoC 202 may be any desired type of bus or interconnect, which may depend on the architecture of the SoC 202 and/or the uses for which the SoC 202 or PCD are intended. As illustrated in FIG. 4, an "off-chip" DDR 250 is also connected to the interconnect/bus 240 in communication with the cores 220, 222, 224, 226 and/or their respective L1 caches 221, 223, 225, 227. As discussed above, in operation one or more of the L1 caches 221, 223, 225, 227 may fetch content from the DDR 250 located outside the SoC 202 as needed (or from other memories or locations outside the SoC 202), and write the fetched content as cache lines in the cache.

The SoC 202 may also include other components and/or sub-systems (including those illustrated in FIG. 1) which arc not shown in FIG. 4 for clarity. Each of 0th Core 220, 1st Core 222, 2nd Core 224, and Nth Core 226 will include a processor of some type, and each may be implemented as one of the cores 120, 122, 124, 126 discussed above for FIG. 1. In some implementations, the processor of one or more of the 0th Core 220, 1st Core 222, 2nd Core 224, and Nth Core 226 may be implemented as a general purpose processing unit, while in other implementations the processor(s) may be implemented as a dedicated processor, such as a DSP. Each of 0th Core 220, 1st Core 222, 2nd Core 224, and Nth Core 226 also includes at least one cache memory, illustrated in the FIG. 4 as the L1 cache 221 (for 0th Core 220) L1 cache 223 (for 1st Core 222), L1 cache 225 (for 2nd Core 224), and L1 cache 227 (for Nth Core 2246.

In various implementations, one or more of 0th Core 220, 1st Core 222, 2nd Core 224, and Nth Core 226 may include more or less components than illustrated in FIG. 2, such as additional L2 cache(s). Additionally, in some implementations, the components illustrated in FIG. 4 may be physically arranged on the SoC 202 in varying configurations and one or more components illustrated in FIG. 4 may not be physically located near each other on the SoC 202.

In the implementation illustrated in FIG. 4, each of the L1 caches 221, 223, 225, and 227 contains, or is coupled to an Access Counter, 231, 233, 235, 237, respectively. In the illustrated implementation, the Access Counters 231, 233, 235, 237 are hardware counters coupled to the L1 caches 221, 223, 225, 227 between the caches and the interconnect/bus 240. In other implementations, the Access Counters 231, 233, 235, 237 may be hardware, firmware, software, or logic located in the L1 caches 221, 223, 225, 227 themselves or in the cores 220, 222, 224, 226 as desired.

During operation of the system 400, when an L1 cache 221 for example, fetches or retrieves content from DDR 250 (or other "off-chip" locations), the Access Counter 231 associated with that L1 cache 221 creates a record of the activity. Each time the L1 cache 221 fetches content from a memory or source "off-chip," the associated Access counter 231 records information about the fetch operation by the L1 cache 221. Exemplary information that may be recorded include the number of fetch operations, the number of cache lines fetched, the number of bytes fetched and written to the cache, from where the content was fetched (such as DDR 250), etc. As a result, each of the Access Counters 231, 233, 235, 237 may keep a running count or record of the number, amount, type, location, etc., of the fetch operations performed by its associated L1 cache 221,223,225,227.

Although illustrated in the implementation of FIG. 4 as being associated with one L1-type cache, it will be understood that one or more of Access Counters 231, 233, 235, 237 may be associated with additional or different caches, including cache(s) that are shared by multiple cores/CPUs, L2 caches, and/or multiple levels of cache(s) used by a core 220, 222, 224, 226. Thus, in some implementations, Access Counters 231, 233, 235, 237 may each store this running count, or record information, for multiple different caches. In an implementation, the running count or record information (whether for one cache or multiple caches) may be stored in a memory of the Access Counter 231, 233, 235, 237. In other implementations, the Access Counters 231, 233, 235, 237 may store this running count or record information elsewhere, such as in their respective associated caches, such as illustrated L1 caches 221, 223, 225, 227. In yet other implementations, running count or record information collected by the Access Counters 231, 233, 235, 237 may be stored in a central location, such Low Power Mode Controller (LPM Controller 260).

The exemplary LPM Controller 260, illustrated in FIG. 4 as connected to the intcrconncct/bus 240, may receive or obtain the running count or record information from one or more of the Access Counters 231, 233, 235, 237 for use when the PCD 100 makes determinations about placing one or more of cores 220, 222, 224, 226 into one or more low power modes. For example, in an implementation the LPM Controller 260 may comprise a centralized driver, logic, software, or algorithm, which may be part of an operating system for the PCD 100 in an implementation that makes the determinations whether to place one or more of cores 220, 222, 224, 226 into a low power mode (and/or which low power mode). In another implementation, the LPM Controller 260 may be a hardware component, or collection of hardware components, on the SoC 202 for performing the low power mode determinations for one or more of corcs 220, 222, 224, 226.

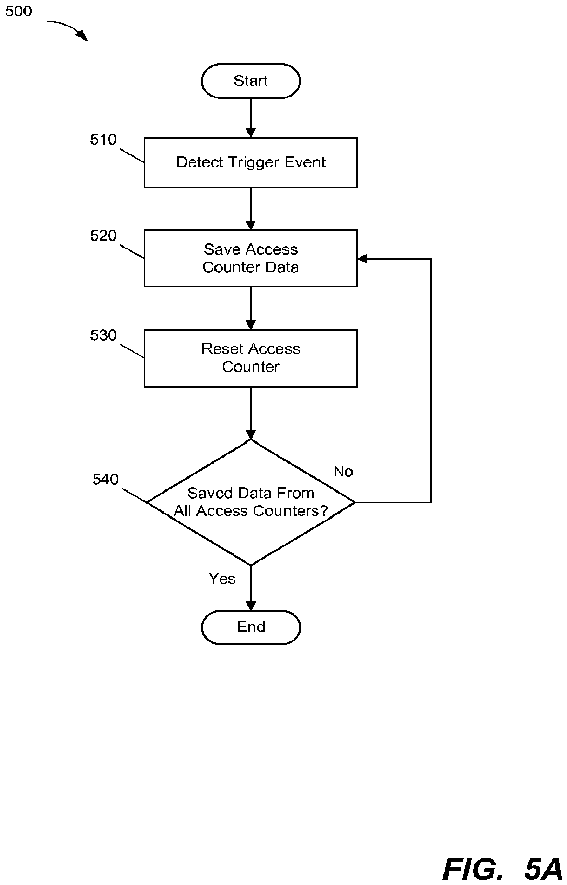

In operation, the Access Counters 231, 233, 235, 237 of FIG. 4 may be used as part of a method for improved implementation of low power modes for cores/CPUs based on the operating state of the cache(s) associated with the Access Counters 231, 233, 235, 237. FIG. 5A is a flowchart illustrating aspects of an exemplary method 500 for improved implementation of low power modes for cores/CPUs based on the operating state of the cache(s) associated with the cores/CPUs.

As illustrated in FIG. 5A, the method 500 begins in block 510 with the detection of a trigger event. In this implementation of method 500, it is assumed that the Access Counters 231, 233, 235, 237 have been collecting and/or recording running counts of the access information for one or more associated caches, such as L1 caches 231, 233, 235, 237. In step 510 of method 500, a trigger event is detected. In an implementation, the trigger event is detected by one or more of Access Counters 231, 233, 235, 237. In an implementation, where the Access Counters 231, 233, 235, 257 are implemented in hardware, the trigger event detected by the Access Counters 231, 233, 235, 257 may be a received periodic signal, such as V-Sync discussed above with respect to FIG. 1. In such implementations the periodic signal may be received directly by the Access Counters, or may be received indirectly through the respective cores 220, 222, 224, 226.

In another implementation, the detection of a trigger event may be by another component, such as by the LPM Controller 260. In an implementation, the LPM Controller 260 may detect the trigger event and then may act by itself, or in conjunction with one or more of the Access Counters 231, 233, 235, 237 to perform the remaining blocks of the method 500.

In block 520 the collected Access Counter data, such as the running count or record information being collected by the Access Counters 231, 222, 235, 237, is saved. In some implementations, the Access Counters 231, 233, 235, 237 perform this block 520 by saving or storing the collected access record information to a memory. One or more of the Access Counters 231, 233, 235, 237 may save this information to a memory local to the Access Counter in some implementations. In other implementations, the Access Counter data may be saved elsewhere, such as in an L1 cache 221, 223, 225, 227 associated with the Access Counter, or at a central location such as LPM Controller 260 (or memory accessible to LPM Controller 260).

In some implementations, the Access Counters 231, 233, 235, 237 may save a summary or aggregation of the collected record information at block 520. For example, rather than save each access record separately, one or more of the Access Counters 231, 233, 235, 237 may save a total number of fetches by one or more cache, a total number of cache lines fetched by one or more cache, the total number of bytes of data fetched by one or more caches, etc.

In other implementations saving the Access Counter Data (and/or the summary or aggregation of the Access Counter Data) may instead be performed by a different portion of the PCD 100, such as LPM Controller 260. In an implementation, after detecting the trigger event in block 510 the LPM Controller 260 may retrieve Access Counter Data (and/or a summary or aggregation of the Access Counter Data) from one or more of the Access Counters 231, 233, 235, 237 and store that information in a memory associated with the LPM Controller 260. In another implementation, after detecting the trigger event in block 510 the LPM Controller 260 may cause one or more of the Access Counters 231, 233, 235, 237 to provide the collected data (and/or a summary or aggregation of the Access Counter Data) to the LPM Controller 260 or to another location where it may be accessed by the LPM Controller 260.

The method 500 continues to block 530 where the Access Counters 231, 233, 235, 237 arc reset. In block 530 the memory stores containing the running information about cache fetches are cleared and/or reset, not the memories to which the Access Counter Data has been saved in step 520. In this manner, block 530 causes the Access Counters 231, 233, 235, 237 to begin a new running collection of information about cache fetches for a new time period, creating separate sampling periods for which the cache fetch information is obtained and saved. Block 530 may be accomplished either directly by the Access Counters 231, 233, 235, 237 resetting or by clearing a local memory or other memory where the running record information has been stored. In other embodiments, implementations, this may be performed by the LPM Controller 260 causing such Access Counter memory or other memory to reset.

After the Access Counters 231, 233, 235, 237 are reset in block 530, optional block 540 may be performed. For example, in implementations where each Access Counter 231, 233, 235, 237 separately performs the method 500 for a single cache there may be no need to perform block 540 of the method 500. In other implementations, such as where one or more Access Counter 231, 233, 235, 237 is separately performing the method 500 for a multiple caches, block 540 may be performed. For such implementations, the Access Counter 231, 233, 235, 237 determines in block 540 whether data has been saved for all of the caches. If so, the method 500 ends. If not, the method 500 returns to block 520 where the Access Counter Data for the additional cache(s) are saved and the Access Counter is reset as to those additional cache(s) (block 530).

In yet other implementations, such as where LPM Controller 260 (or other component of PCD 100) is performing the method 500 for multiple Access Counters 231, 233, 235, 237, block 540 may also be performed. For such implementations, the LPM Controller 260 (or other component of PCD 100) determines in block 540 whether data has been saved for all of the Access Counters 231, 233, 235, 237. If so, the method 500 ends. If not, the method 500 returns to block 520 where the Access Counter Data for the additional Access Counters 231, 233, 235, 237 are saved and the additional Access Counters 231, 233, 235, 237 are reset (block 530).

As would be understood, the exemplary method 500 of FIG. 5A allows for the capture of an operational state of one or more caches associated with a core/CPU, such as L1 caches 221, 223, 225, 227 associated with cores 220, 222, 224, 226 of FIG. 4A. In particular, for instances when a core/CPU enters an idle state (see FIG. 2), the exemplary method 500 captures and provides information about the operational state of caches associated with the core/CPU for a time period or sampling period immediately before the core/CPU went into the idle state - i.e. information that may be used to calculate or estimate how much time and/or power may be needed to rebuild or re-populate the cache when the core/CPU exits from a low power mode as discussed below. The exemplary method 500 also allows the information about the operational state of these caches to be captured and recorded for multiple periods of time or sampling periods before the core/CPU when into the idle state, providing a history of the cache's operational state that may also be used as part of this calculation or estimation of the time and/or power needed to rebuild or re-populate the cache.

Although an exemplary method 500 has been described in the context of FIG. 5A, it will be understood that other methods or implementations of the method 500 may be implemented. For example, in other implementations the Access Counters 231, 233, 235, 237 may not be previously operating before the start of the method 500. In such embodiments, detecting the trigger event in block 510 may instead cause the Access Counters 231, 233, 235, 237 reset and then begin collecting fetch information, starting a new sampling period. In such implementations, a subsequent trigger event may cause the collected fetch information to be saved, and the Access Counters 231, 233, 235, 237 to be reset as discussed above, starting the next sampling period. Thus, in this alternative implementation of the method 500, blocks 520 and 530 of FIG. 5A would be reversed in order. Other implementations and/or alterations of the method 500 of FIG. 5A are also possible as would be understood.

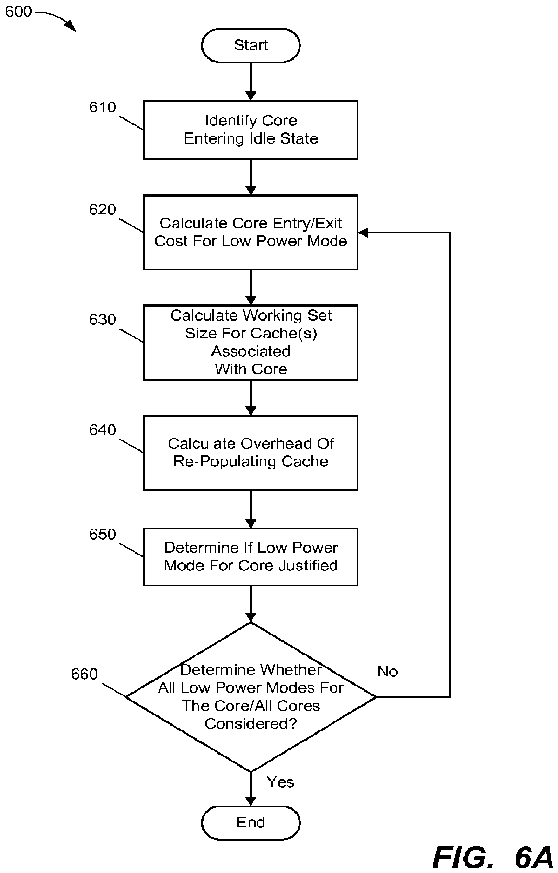

Turning next to FIG. 6A, additional aspects of an exemplary embodiment of a method 600 for improved implementation of low power modes for cores/CPUs are illustrated. The method 600 of FIG. 6A begins in block 610 with the identification or detection of one or more core/CPU, such as cores 220, 222, 224, 226 of FIG. 4 entering an idle state. The entry of one or more core/CPU into an idle state is identified or detected by the PCD 100, such as by a component like the LPM Controller 260 illustrated in FIG. 4. As discussed above, the LPM Controller 260 may be a separate component (or collection of components), or may be an algorithm, application, program, driver, etc., operating on the PCD 100. Alternatively, in other embodiments, the identification or determination of block 610 (and the remaining blocks of method 600) may be performed by the core/CPU that is entering the idle state. As would be understood, there are multiple ways to identify or determine in block 610 that one or more core is entering an idle state.

Once a core/CPU has been identified or determined as entering an idle state, the entry and exit overhead (such as a power cost) of placing the core/CPU in a low power mode is calculated in block 620. As discussed above for FIG. 3A, this entry/exit power cost is typically predetermined for each core/CPU and does not change based on the operational state of the PCD 100. In some embodiments, each core/CPU entering the idle state may perform the calculations of block 620 for itself. In other embodiments, a centralized component or driver/application/algorithm, such as LPM Controller 260 of FIG. 4, may perform block 620 for one or more core/CPU.

In block 630 a working set size for one or more caches associated with the core/CPU is calculated or determined. In some embodiments, the cache may be an L1 cache associated with the core/CPU, such as L1 cache 221, 223, 225, 227 of FIG. 4. In other embodiments, the cache may be an L2 or other cache shared or accessible to more than one core/CPU. In an embodiment, calculating or determining the working set comprises estimating or calculating an operational status of the cache based on information about fetches made by cache from "off-chip" sources such as a DDR memory (see DDR 250 of FIG. 4), a disc such as a DVD, a remote server connected by a network, etc. Such information includes information collected by Access Counters 231, 233, 235, 237 of FIG. 4, as discussed for FIG. 5A.

In an implementation, the working set size for the cache may be calculated or determined from the most recent information about the cache, such as information gathered in the most recent time period/sampling period before the core/CPU entered the idle state as discussed in FIG. 5A. For example, the working set size may be a total number of cache lines fetched by the cache in the most recent time period/sampling period, a number of bytes or content fetched by the cache in the most recent time period /sampling period, etc.

In other embodiments, the working set size of the cache is calculated or determined from more than the most recent information about the cache, such as information gathered in previous time periods/sampling periods before the core/CPU entered the idle state. In such embodiments calculating the working set size for the cache in block 630 comprises determining an average number of cache lines and/or average number of bytes of content fetched by the cache during the past N time periods/sampling periods. In other implementations, calculating the working set size for the cache in block 630 may instead, or additionally, comprise determining the largest number of cache lines and/or largest number of bytes of content fetched by the cache in any of the past N time periods/sampling periods.

In some embodiments, each core/CPU entering the idle state may perform the calculation or determination of block 630 for itself. In other embodiments, a centralized component or driver/application/algorithm, such as LPM Controller 260 of FIG. 4, may perform the calculation or determination of block 630 for one or more core/CPU entering an idle state.

The method 600 continues to block 640 where an overhead for re-populating, re-loading, re-fetching, and/or rebuilding the cache is determined. In an embodiment the determination or calculation of block 640 comprises determining for the low power mode, a power cost for re-populating, re-loading, re-fetching, and/or rebuilding the cache. This calculation of the power cost may be performed using the working set size determined in block 630, regardless of how the working set size was determined.

In other embodiments, the calculation or determination of block 640 may alternatively, or additionally, comprise determining for the low power mode a latency for re-populating, re-loading, re-fetching, and/or rebuilding the cache. This calculation of the latency may also be performed using the working set size determined in block 630, regardless of how the working set size was determined. For example in an implementation, the calculation of block 640 may comprise multiplying a total number of cache lines accessed/fetched in the most recent time period/sampling period by the time for the cache to access/fetch a cache line to a determine a total time to re-populate, re-load, or rebuild the working set into the cache. As would be understood, additional calculations or determinations may be implemented in block 640, and the calculations may depend on how the working set is calculated in block 630.

In some embodiments, each core/CPU entering the idle state may perform the calculations or determinations of block 640 for itself. In other embodiments, a centralized component or driver/application/algorithm, such as LPM Controller 260 of FIG. 4, may perform the calculations or determinations of block 640 for one or more core/CPU entering an idle state.

In block 650, the method 600 determines if the low power mode for the core is justified. In an embodiment, the determination of block 650 is based on the calculations or determinations of blocks 620, 630, and/or 640. For example, in some embodiments, the block 650 may comprise comparing the power cost of keeping a core/CPU in an active state with the power cost of placing the core/CPU into a low power state (such as LPM2 of FIG. 3A). The power cost from placing the core/CPU into the low power state may be determined in an embodiment by first multiplying the power consumption/leakage of the core/CPU in the low power state by the period of time the core/CPU is "resident" in the low power state to obtain a "raw" power cost. The period of time that the core/CPU is "resident" in the low power state may be determined based on an entry/exit latency of the core/CPU as well as on the latency of re-populating one or more cache(s) associated with the core/CPU. This "raw" power cost may be adjusted by an entry/exit power cost of the core/CPU for the low power state, as well as a power cost of re-populating the one or more cache(s) associated with the core/CPU, to determine a final, total power cost of placing the core/CPU into the low power mode.

As would be understood, any of the ways of performing the calculations or determinations of blocks 620, 630, 640 may be used in the any of the above portions of the example calculation/determination of block 650 to arrive at the final, total power cost of placing the core/CPU into the low power mode. Additionally, as would be understood entirely different ways of arriving at the final total power cost of placing the core/CPU into the low power mode may be implemented in block 650. Such different implementations may have more or fewer portions to the determination and/or may take into consideration different information.

In an embodiment, if the final, total power cost of placing the corc/CPU into the low power mode is not less than the power cost of keeping the core/CPU in a fully active mode, the low power mode is not justified. Tn another embodiment, the determination of block 650 may instead require that the "cost savings" from placing the core/CPU into the low power mode exceed the power cost of the fully active mode by a pre-determined amount, percentage, or threshold for the low power mode to be justified.

In some embodiments, each core/CPU entering the idle state may perform the determinations or calculations of block 650 for itself. In other embodiments, a centralized component or driver/application/algorithm, such as LPM Controller 260 of FIG. 4, may perform the determinations or calculations of block 650 for one or more core/CPU entering an idle state.

After block 650, block 660 may be performed to decide whether all low power modes for the core/CPU entering the idle state, or for all cores/CPUs entering an idle state, have been considered. If they have been considered, the method 600 ends. If all low power modes for the core/CPU, or for all cores/CPUs, have not been considered, the method 600 returns to block 620 and begins the calculations/determinations for the next low power mode of the core/CPU or for the next core/CPU.

Block 660 is optional in some embodiments. For example, in an embodiment where only one low power mode exits for a corc/CPU, block 660 is unnecessary and the method 600 could end after determining whether the low power mode is justified in block 650. In other embodiments, multiple low power modes may exist for a core/CPU, but the core/CPU, algorithm, logic, application, driver, etc., implementing method 600 may be structured such that all possible low power modes for the core/CPU are evaluated sequentially, stopping when any low power mode is determined to be justified. In such embodiments the determination in block 650 that a low power mode is justified could also end the method 600.

In yet other embodiments, method 600 may evaluate all possible low power modes for a core/CPU at the same time. Tn these embodiments, block 650 may further include a determination of a "best" low power mode, such as a low power mode with the greatest power cost savings over an active mode. For these embodiments, determination in block 650 of a "best" low power mode could also end the method 600.

In some embodiments, each core/CPU entering the idle state may perform the determination of block 660 for itself where necessary. In other embodiments, a centralized component or driver/application/algorithm, such as LPM Controller 260 of FIG. 4, may perform the determination of block 660 for one or more core/CPU entering an idle state.

As would be understood, FIG 6A describe only one exemplary embodiment of the disclosed method 600. Additional blocks or steps may be added to the method 600 illustrated in FIG. 6A. Similarly, in some embodiments various blocks or steps shown in FIG 6A may be combined or omitted, provided that they fall within the scope of the appended claims.

Additionally, certain steps in the processes or process flows described in FIG. 6A may naturally precede others for the invention to function in the embodiments as described. However, the disclosure is not limited to the order of the steps described if such order or sequence does not alter the functionality of the invention as defined by the appended claims. Moreover, it is recognized that some steps may performed before, after, or in parallel (substantially simultaneously) with other steps provided that they fall within the scope of the appended claims. Further, words such as "thereafter", "then", "next", "subsequently", *etc.* are not intended to limit the order of the steps. These words are simply used to guide the reader through the description of the exemplary method.

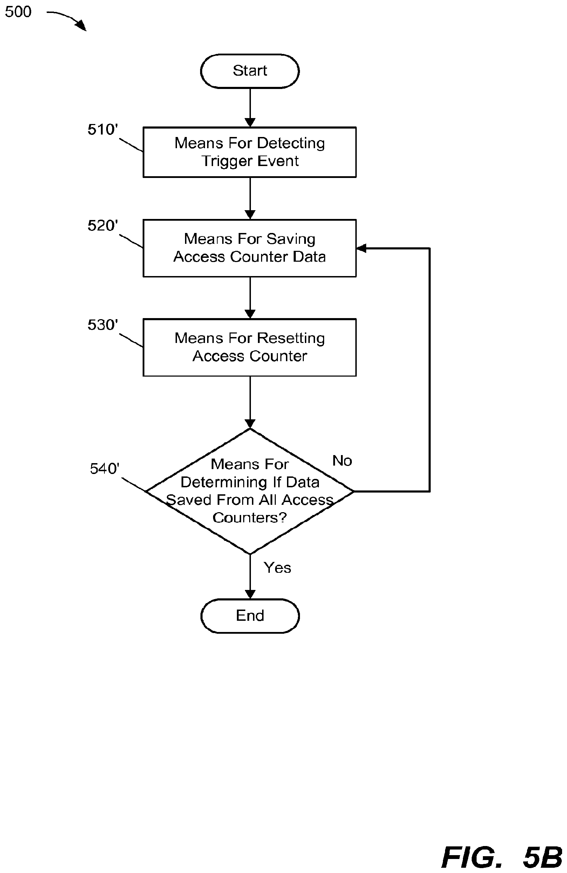

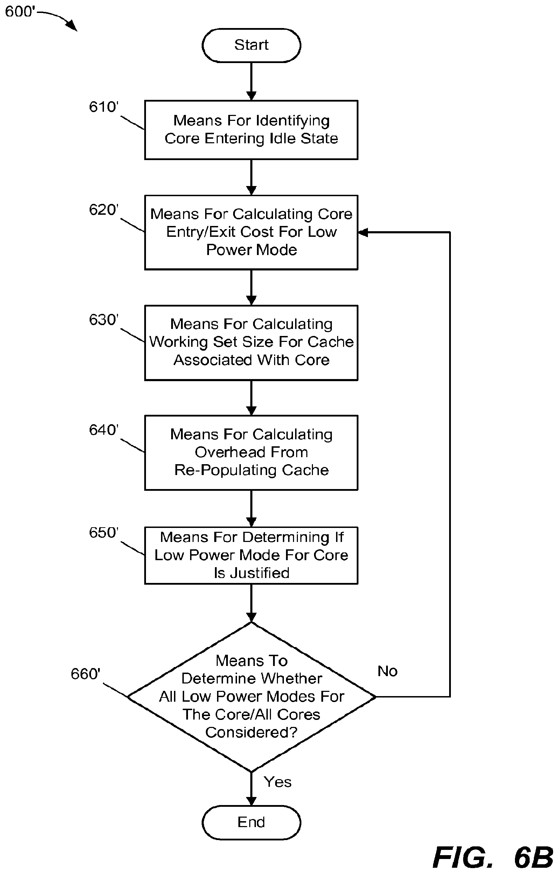

The various operations, methods, or functions described above for methods 500 and 600 may be performed by various hardware and/or software component(s)/module(s). Such component(s) and/or module(s) may provide the means to perform the various described operations, methods, or functions. Generally, where there are methods illustrated in Figures having corresponding counterpart means-plus-function Figures, the operation blocks correspond to means-plus-function blocks with similar numbering. For example, blocks 510-540 illustrated in FIG. 5A correspond to means-plus-function blocks 510'-540' illustrated in FIG. 5B. Similarly, blocks 610-660 illustrated in FIG. 6A correspond to means-plus-function blocks 610'-660' illustrated in FIG. 6B.

One of ordinary skill in programming is able to write computer code or identify appropriate hardware and/or circuits to implement the disclosed invention without difficulty based on the flow charts and associated description in this specification, for example. Therefore, disclosure of a particular set of program code instructions or detailed hardware devices is not considered necessary for an adequate understanding of how to make and use the invention. The inventive functionality of the claimed processor-enabled processes is explained in more detail in the above description and in conjunction with the drawings, which may illustrate various process flows.

In one or more exemplary aspects as indicated above, the functions described may be implemented in hardware, software, firmware, or any combination thereof. If implemented in software, the functions may be stored on or transmitted as one or more instructions or code on a computer-readable medium, such as a non-transitory processor-readable medium. Computer-readable media include both data storage media and communication media including any medium that facilitates transfer of a program from one location to another.

A storage media may be any available media that may be accessed by a computer or a processor. By way of example, and not limitation, such computer-readable media may comprise RAM, ROM, EEPROM, CD-ROM or other optical disk storage, magnetic disk storage or other magnetic storage devices, or any other medium that may be used to carry or store desired program code in the form of instructions or data structures and that may be accessed by a computer. Disk and disc, as used herein, includes compact disc ("CD"), laser disc, optical disc, digital versatile disc ("DVD"), floppy disk and blu-ray disc where disks usually reproduce data magnetically, while discs reproduce data optically with lasers. Combinations of the above should also be included within the scope of non-transitory computer-readable media.

Although selected aspects have been illustrated and described in detail, it will be understood that various substitutions and alterations may be made herein without departing from the present invention, as defined by the following claims.

## Claims

1. A method for dynamically implementing improved decision making as to whether to enter an idle core or CPU into a low power mode, in a multi-core system-on-a-chip, SoC, in a portable computing device, PCD, the method comprising:
identifying (610) a core of the multi-core SoC entering an idle state;
calculating (620), for a low power mode of the core, an entry power cost of the core and an exit power cost of the core;
calculating (630) a working set size for a cache associated with the core wherein calculating (630) comprises determining an average number of cache lines retrieved by the cache during a plurality of sampling periods including counting with an Access Counter coupled to the cache, the number of cache lines retrieved by the cache during the plurality of sampling periods;
calculating (640), using the working set size for the cache, a latency for the cache to exit the low power mode of the core; and
determining (650) if the low power mode for the core results in a power saving over an active mode based in part on the entry power cost of the core, the exit power cost of the core and the latency for the cache to exit the low power mode.

2. The method of claim 1, further comprising:
calculating using the working set size for the cache, a power cost for the cache to exit the low power mode of the core, wherein the determination if the low power mode for the cache results in the power savings is also based in part on the power cost for the cache to exit the low power mode.

3. The method of claim 1, wherein calculating (640) using the working set size for the cache, a latency for the cache to exit the low power mode further comprises:
multiplying the average number of cache lines retrieved during the plurality of sampling periods by a time required for the cache to retrieve each cache line.

4. The method of claim 1, wherein:
counting with an Access Counter coupled to cache further comprises resetting the Access Counter at the end of each of the plurality of sampling periods.

5. A computer system for dynamically implementing improved decision making as to whether to enter an idle core or CPU into a low power mode, in a multi-core system-on-a-chip, SoC, in a portable computing device, PCD, the system comprising:
a core of the SoC;
a cache of the SoC in communication with the core; and
a low power mode controller in communication with the core and the cache, the low power mode controller configured to:
identify (610) that the core is entering an idle state,
calculate (620) for a low power mode of the core an entry power cost for the core and an exit power cost for the core,
calculate (630) a working set size for the cache wherein calculating (630) comprises determining an average number of cache lines retrieved by the cache during the plurality of sampling periods,
calculate (640) using the working set size for the cache, a latency for the cache to exit the low power mode of the core, and
determine (650) if the low power mode for the core results in a power savings over an active mode based in part on the entry power cost of the core, the exit power cost of the core, and the latency for the cache to exit the low power mode,
wherein the system further comprises an Access Counter coupled to the cache, the Access Counter configured to count the number of cache lines retrieved by the cache during the plurality of sampling periods.

6. The system of claim 5, wherein the low power mode controller is further configured to:
calculate using the working set size for the cache, a power cost for the cache to exit the low power mode of the core, and determine if the low power mode for the cache results in a power savings based in part on the power cost for the cache to exit the low power mode.

7. The system of claim 5, wherein the low power mode controller configured to calculate using the working set size for the cache, a latency for the cache to exit the low power mode further comprises:
the low power mode controller configured to multiply the average number of cache lines retrieved during the plurality of sampling periods with a time required for the cache to retrieve each cache line.

8. The system of claim 5, wherein:
the Access Counter is further configured to reset at the end of each of the plurality of sampling periods.

9. A computer program product for dynamically implementing improved decision making as to whether to enter an idle core or CPU into a low power mode, comprising a non-transitory computer usable medium having a computer readable program code embodied therein, said computer readable program code adapted to be executed to implement a method for improved implementation of low power modes in a multi-core system-on-a-chip, SoC, in a portable computing device, PCD, the method comprising:
identifying (610) a core of the multi-core SoC entering an idle state;
calculating (620) for a low power mode of the core an entry power cost of the core and an exit power cost of the core;
calculating (630) a working set size for a cache associated with the core wherein calculating comprises determining an average number of cache lines retrieved by the cache during the plurality of sampling periods including counting with an Access Counter coupled to the cache, the number of cache lines retrieved by the cache during the plurality of sampling periods;
calculating (640) using the working set size for the cache, a latency for the cache to exit the low power mode of the core; and
determining (650) if the low power mode for the core results in a power savings over an active mode based in part on the entry power cost of the core, the exit power cost of the core, and the latency for the cache to exit the low power mode.

10. The computer program product of claim 9, further comprising:
calculating using the working set size for the cache, a power cost for the cache to exit the low power mode of the core, wherein the determination if the low power mode for the cache results in the power savings is also based in part on the power cost for the cache to exit the low power mode.

11. The computer program product of claim 9, wherein calculating using the working set size for the cache, a latency for the cache to exit the low power mode further comprises:
multiplying the average number of cache lines retrieved during the plurality of sampling periods by a time required for the cache to retrieve each cache line.

## Patentansprüche

1. Ein Verfahren zum dynamischen Implementieren eines verbesserten Entscheidungsprozesses, ob ein im Leerlauf befindlicher Core bzw. Kern oder eine im Leerlauf befindliche CPU in einen Modus mit geringer Leistung bzw. Niedrigleistungsmodus eintreten sollte, in einem Multi-Core- bzw. Multi-Kern-SoC (SoC = system-on-a-chip) in einer tragbaren Recheneinrichtung bzw. PCD (PCD = portable computing device), wobei das Verfahren Folgendes aufweist:
Identifizieren (610), dass ein Kern eines Multi-Kern-SoC in einen Leerlaufzustand eintritt;
Berechnen (620), für einen Niedrigleistungsmodus des Kerns, eines Eintrittsleistungsaufwands des Kerns und eines Austrittsleistungsaufwands des Kerns;
Berechnen (630) einer Arbeitssatzgröße für einen Cache, der mit dem Kern assoziiert ist, wobei das Berechnen (630) aus Bestimmen einer durchschnittlichen Anzahl von Cachezeilen aufweist, die durch den Cache während einer Vielzahl von Abtastungsperioden abgerufen werden, einschließlich Zählen, mit einem Zugriffszähler, der an den Cache gekoppelt ist, der Anzahl von Cachezeilen, die durch den Cache während der Vielzahl von Abtastungsperioden abgerufen werden;
Berechnen (640), unter Nutzung der Arbeitssatzgröße für den Cache, einer Latenz für den Cache zum Austreten aus dem Niedrigleistungsmodus des Kerns; und
Bestimmen (650), ob der Niedrigleistungsmodus für den Kern in einer Leistungseinsparung gegenüber einem aktiven Modus resultiert basierend teilweise auf dem Eintrittsleistungsaufwand des Kerns, dem Austrittsleistungsaufwands des Kerns und der Latenz für den Cache zum Austreten aus dem Niedrigleistungsmodus.

2. Verfahren nach Anspruch 1, das weiter Folgendes aufweist:
Berechnen unter Nutzung der Arbeitssatzgröße für den Cache, eines Leistungsaufwandes für den Cache aus dem Niedrigleistungsmodus des Kerns auszutreten, wobei die Bestimmung, ob der Niedrigleistungsmodus für den Cache in den Leistungseinsparungen resultiert, auch teilweise auf dem Leistungsaufwand für den Cache zum Austreten aus dem Niedrigleistungsmodus basiert.

3. Verfahren nach Anspruch 1, wobei das Berechnen (640) unter Nutzung der Arbeitssatzgröße für den Cache, einer Latenz für den Cache zum Austreten aus dem Niedrigleistungsmodus weiter Folgendes aufweist:
Multiplizieren der durchschnittlichen Anzahl von Cachezeilen, die während der Vielzahl von Abtastungsperioden abgerufen werden mit einer Zeit, die für den Cache erforderlich ist, um jede Cachezeile abzurufen.

4. Verfahren nach Anspruch 1, wobei:
das Zählen mit einem Zugriffszähler, der an den Cache gekoppelt ist, weiter Zurücksetzen des Zugriffszählers an dem Ende jeder der Vielzahl von Abtastungsperiode aufweist.

5. Ein Computersystem für dynamisches Implementieren verbesserter Entscheidungsprozesse, ob ein im Leerlauf befindlicher Core bzw. Kern oder eine im Leerlauf befindliche CPU in einen Modus mit niedriger Leistung bzw. Niedrigleistungsmodus eintreten soll, in einem Multi-Kern-SoC (SoC = system-on-a-chip) in einer tragbaren Recheneinrichtung bzw. PCD (PCD = portable computing device), wobei das System Folgendes aufweist:
einen Kern des SoC;
einen Cache des SoC in Kommunikation mit dem Kern; und
einen Niedrigleistungsmoduscontroller in Kommunikation mit dem Kern und
dem Cache, wobei der Niedrigleistungsmoduscontroller konfiguriert ist zum: Identifizieren (610), dass der Kern in einen Leerlaufzustand eintritt, Berechnen (620), für einen Niedrigleistungsmodus des Kerns, von Eintrittsleistungsaufwand für den Kern und Austrittsleistungsaufwand für den Kern, Berechnen (630) einer Arbeitssatzgröße für den Cache, wobei das Berechnen (630) Bestimmen einer durchschnittlichen Anzahl von Cachezeilen aufweist, die durch den Cache während der Vielzahl von Abtastungsperiode abgerufen werden,
Berechnen (640), unter Nutzung der Arbeitssatzgröße für den Cache, einer Latenz für den Cache zum Austreten aus dem Niedrigleistungsmodus des Kerns, und
Bestimmen (650), ob der Niedrigleistungsmodus für den Kern in Leistungseinsparungen gegenüber einem aktiven Modus resultiert basierend teilweise auf dem Eintrittsleistungsaufwand des Kerns, dem Austrittsleistungsaufwands des Kerns und der Latenz für den Cache zum Austreten aus dem Niedrigleistungsmodus,
wobei das System weiter einen Zugriffszähler aufweist, der an den Cache gekoppelt ist, wobei der Zugriffszähler konfiguriert ist zum Zählen der Anzahl von Cachezeilen, die durch den Cache während der Vielzahl von Abtastungsperiode abgerufen werden.

6. System nach Anspruch 5, wobei der Niedrigleistungsmoduscontroller weiter konfiguriert ist zum:
Berechnen, unter Nutzung der Arbeitssatzgröße für den Cache, von Leistungsaufwand für den Cache zum Austreten aus dem Niedrigleistungsmodus des Kerns, und Bestimmen, ob der Niedrigleistungsmodus für den Cache in Leistungseinsparungen resultiert basierend teilweise auf dem Leistungsaufwand für den Cache zum Austreten aus dem Niedrigleistungsmodus.

7. System nach Anspruch 5, wobei der Niedrigleistungsmoduscontroller, der konfiguriert ist zum Berechnen, unter Nutzung der Arbeitssatzgröße für den Cache, einer Latenz für den Cache zum Austreten aus dem Niedrigleistungsmodus, weiter Folgendes aufweist:
den Niedrigleistungsmoduscontroller, der konfiguriert ist zum Multiplizieren der durchschnittlichen Anzahl von Cachezeilen, die während der Vielzahl von Abtastungsperioden abgerufen werden, mit einer Zeit, die für den Cache erforderlich ist zum Abrufen jeder Cachezeile.

8. System nach Anspruch 5, wobei:
der Zugriffszähler weiter konfiguriert ist am Ende jeder der Vielzahl von Abtastungsperiode zurückgesetzt zu werden.

9. Ein Computerprogrammprodukt zum dynamischen Implementieren verbesserter Entscheidungsprozesse bezüglich dessen, ob ein im Leerlauf befindlicher Core bzw. Kern oder eine im Leerlauf befindliche CPU in einen Modus mit geringer Leistung bzw. Niedrigleistungsmodus eintreten sollte, das ein nicht transitorisches von einem Computer nutzbares Medium aufweist, das von einem Computer lesbaren Programmcode darin verkörpert, wobei der von einem Computer lesbare Programmcode ausgelegt ist ausgeführt zu werden zum Implementieren eines Verfahrens zur verbesserten Implementierung von Niedrigleistungsmodi in einem Multi-Core- bzw. Multi-Kern-SoC (SoC = system-on-a-chip) in einer tragbaren Recheneinrichtung bzw. PCD (PCD = portable computing device), wobei das Verfahren Folgendes aufweist:
Identifizieren (610), dass ein Kern eines Multi-Kern-SoC in einen Leerlaufzustand eintritt;
Berechnen (620), für einen Niedrigleistungsmodus des Kerns, eines Eintrittsleistungsaufwands des Kerns und eines Austrittsleistungsaufwands des Kerns;
Berechnen (630) einer Arbeitssatzgröße für einen Cache, der mit dem Kern assoziiert ist, wobei das Berechnen Bestimmen einer durchschnittlichen Anzahl von Cachezeilen aufweist, die durch den Cache während einer Vielzahl von Abtastungsperioden abgerufen werden, einschließlich Zählen, mit einem Zugriffszähler, der an den Cache gekoppelt ist, der Anzahl von Cachezeilen, die durch den Cache während der Vielzahl von Abtastungsperioden abgerufen werden;
Berechnen (640), unter Nutzung der Arbeitssatzgröße für den Cache, einer Latenz für den Cache zum Austreten aus dem Niedrigleistungsmodus des Kerns; und
Bestimmen (650), ob der Niedrigleistungsmodus für den Kern in Leistungseinsparungen gegenüber einem aktiven Modus resultiert basierend teilweise auf dem Eintrittsleistungsaufwand des Kerns, dem Austrittsleistungsaufwands des Kerns und der Latenz für den Cache zum Austreten aus dem Niedrigleistungsmodus.

10. Computerprogrammprodukt nach Anspruch 9, das weiter Folgendes aufweist:
Berechnen, unter Nutzung der Arbeitssatzgröße für den Cache, von Leistungsaufwand für den Cache zum Austreten aus dem Niedrigleistungsmodus des Kerns, wobei die Bestimmung, ob der Niedrigleistungsmodus für den Cache in den Leistungseinsparungen resultiert auch teilweise auf dem Leistungsaufwand für den Cache zum Austreten aus dem Niedrigleistungsmodus basiert.

11. Computerprogrammprodukt nach Anspruch 9, wobei das Berechnen, unter Nutzung der Arbeitssatzgröße für den Cache, einer Latenz für den Cache zum Austreten aus dem Niedrigleistungsmodus weiter Folgendes aufweist: Multiplizieren der durchschnittlichen Anzahl von Cachezeilen, die während der Vielzahl von Abtastungsperioden abgerufen werden, mit einer Zeit, die für den Cache zum Abrufen jeder Cachezeile erforderlich ist.

## Revendications

1. Un procédé de mise en œuvre dynamique de prise de décision améliorée destiné à examiner s'il convient de placer une CPU ou un cœur en veille dans un mode faible puissance, dans un système sur puce, SoC, à cœurs multiples dans un dispositif informatique portatif, PCD, le procédé comprenant :
l'identification (610) d'un cœur du SoC à cœurs multiples entrant dans un état en veille,
le calcul (620), pour un mode faible puissance du cœur, d'un coût de puissance d'entrée du cœur et d'un coût de puissance de sortie du cœur,
le calcul (630) d'une taille de travail définie pour une mémoire tampon associée au cœur, où le calcul (630) comprend la détermination d'un nombre moyen de lignes de mémoire tampon récupérées par la mémoire tampon au cours d'une pluralité de périodes d'échantillonnage comprenant le décompte, avec un compteur d'accès couplé à la mémoire tampon, du nombre de lignes de mémoire tampon récupérées par la mémoire tampon au cours de la pluralité de périodes d'échantillonnage,
le calcul (640), au moyen de la taille de travail définie pour la mémoire tampon, d'une latence pour la mémoire tampon pour quitter le mode faible puissance du cœur, et
la détermination (650) si le mode faible puissance pour le cœur résulte en une économie d'énergie sur un mode actif en fonction en partie du coût de puissance d'entrée du cœur, du coût de puissance de sortie du cœur et de la latence pour la mémoire tampon pour quitter le mode faible puissance.

2. Le procédé selon la Revendication 1, comprenant en outre :
le calcul, au moyen de la taille de travail définie pour la mémoire tampon, d'un coût de puissance pour la mémoire tampon pour quitter le mode faible puissance du cœur, où la détermination si le mode faible puissance pour la mémoire tampon résulte en les économies d'énergie est également basée en partie sur le coût de puissance pour la mémoire tampon pour quitter le mode faible puissance.

3. Le procédé selon la Revendication 1, où le calcul (640), au moyen de la taille de travail définie pour la mémoire tampon, d'une latence pour la mémoire tampon pour quitter le mode faible puissance comprend en outre :
la multiplication du nombre moyen de lignes de mémoire tampon récupérées au cours de la pluralité de périodes d'échantillonnage par une durée nécessaire à la mémoire tampon pour récupérer chaque ligne de mémoire tampon.

4. Le procédé selon la Revendication 1, où :
le décompte, avec un compteur d'accès couplé à la mémoire tampon, comprend en outre la réinitialisation du compteur d'accès à la fin de chaque période de la pluralité de périodes d'échantillonnage.

5. Un système informatique de mise en œuvre dynamique de prise de décision améliorée destiné à examiner s'il convient de placer une CPU ou un cœur en veille dans un mode faible puissance, dans un système sur puce, SoC, à cœurs multiples dans un dispositif informatique portatif, PCD, le système comprenant :
un cœur du SoC,
une mémoire tampon du SoC en communication avec le cœur, et
un dispositif de commande à mode faible puissance en communication avec le cœur et la mémoire tampon, le dispositif de commande à mode faible puissance étant configuré de façon à :
identifier (610) que le cœur entre dans un état en veille,
calculer (620), pour un mode faible puissance du cœur, un coût de puissance d'entrée pour le cœur et un coût de puissance de sortie pour le cœur,
calculer (630) une taille de travail définie pour la mémoire tampon où le calcul (630) comprend la détermination d'un nombre moyen de lignes de mémoire tampon récupérées par la mémoire tampon au cours de la pluralité de périodes d'échantillonnage,
calculer (640), au moyen de la taille de travail définie pour la mémoire tampon, une latence pour la mémoire tampon pour quitter le mode faible puissance du cœur, et
déterminer (650) si le mode faible puissance pour le cœur résulte en des économies d'énergie par rapport à un mode actif en fonction en partie du coût de puissance d'entrée du cœur, du coût de puissance de sortie du cœur et de la latence pour la mémoire tampon pour quitter le mode faible puissance,
où le système comprend en outre un compteur d'accès couplé à la mémoire tampon, le compteur d'accès étant configuré de façon à décompter le nombre de lignes de mémoire tampon récupérées par la mémoire tampon au cours de la pluralité de périodes d'échantillonnage.

6. Le système selon la Revendication 5, où le dispositif de commande à mode faible puissance est configuré en outre de façon à :
calculer, au moyen de la taille de travail définie pour la mémoire tampon, un coût de puissance pour la mémoire tampon pour quitter le mode faible puissance du cœur, et déterminer si le mode faible puissance pour la mémoire tampon résulte en des économies d'énergie en fonction en partie du coût de puissance pour la mémoire tampon pour quitter le mode faible puissance.

7. Le système selon la Revendication 5, où le dispositif de commande à mode faible puissance configuré de façon à calculer, au moyen de la taille de travail définie pour la mémoire tampon, une latence pour la mémoire tampon pour quitter le mode faible puissance comprend en outre :
le dispositif de commande à mode faible puissance configuré de façon à multiplier le nombre moyen de lignes de mémoire tampon récupérées au cours de la pluralité de périodes d'échantillonnage par une durée nécessaire à la mémoire tampon pour récupérer chaque ligne de mémoire tampon.

8. Le système selon la Revendication 5, où :
le compteur d'accès est configuré en outre de façon à se réinitialiser à la fin de chaque période de la pluralité de périodes d'échantillonnage.

9. Un produit de programme informatique de mise en œuvre dynamique de prise de décision améliorée destiné à examiner s'il convient de placer une CPU ou un cœur en veille dans un mode faible puissance, comprenant un support utilisable par ordinateur non transitoire possédant du code de programme lisible par ordinateur incorporé dans celui-ci, ledit code de programme lisible par ordinateur étant adapté de façon à être exécuté de façon à mettre en œuvre un procédé de mise en œuvre améliorée de modes faible puissance dans un système sur puce, SoC, à cœurs multiples dans un dispositif informatique portatif, PCD, le procédé comprenant :
l'identification (610) d'un cœur du SoC à cœurs multiples entrant dans un état en veille,
le calcul (620), pour un mode faible puissance du cœur, d'un coût de puissance d'entrée du cœur et d'un coût de puissance de sortie du cœur,
le calcul (630) d'une taille de travail définie pour une mémoire tampon associée au cœur où le calcul comprend la détermination d'un nombre moyen de lignes de mémoire tampon récupérées par la mémoire tampon au cours de la pluralité de périodes d'échantillonnage comprenant le décompte, avec un compteur d'accès couplé à la mémoire tampon, du nombre de lignes de mémoire tampon récupérées par la mémoire tampon au cours de la pluralité de périodes d'échantillonnage,
le calcul (640), au moyen de la taille de travail définie pour la mémoire tampon, d'une latence pour la mémoire tampon pour quitter le mode faible puissance du cœur, et
la détermination (650) si le mode faible puissance pour le cœur résulte en des économies d'énergie par rapport à un mode actif en fonction en partie du coût de puissance d'entrée du cœur, du coût de puissance de sortie du cœur et de la latence pour la mémoire tampon pour quitter le mode faible puissance.

10. Le produit de programme informatique selon la Revendication 9, comprenant en outre :
le calcul, au moyen de la taille de travail définie pour la mémoire tampon, d'un coût de puissance pour la mémoire tampon pour quitter le mode faible puissance du cœur, où la détermination si le mode faible puissance pour la mémoire tampon résulte en les économies d'énergie est également basée en partie sur le coût de puissance pour la mémoire tampon pour quitter le mode faible puissance.

11. Le produit de programme informatique selon la Revendication 9, où le calcul, au moyen de la taille de travail définie pour la mémoire tampon, d'une latence pour la mémoire tampon pour quitter le mode faible puissance comprend en outre :
la multiplication du nombre moyen de lignes de mémoire tampon récupérées au cours de la pluralité de périodes d'échantillonnage par une durée nécessaire à la mémoire tampon pour récupérer chaque ligne de mémoire tampon.
